# EUROPEAN PATENT SPECIFICATION

(11) **EP 0 545 228 B1**
(45) Date of publication and mention of the grant of the patent: **11.09.1996**
(21) Application number: 92119999.8
(22) Date of filing: 24.11.1992
(51) Int. Cl.: B65D 30/02, D21H 27/10, D21H 19/14, D21H 23/22, D21H 25/06

(54) **Moisture-resistant sack**
Feuchtigkeitsbeständiger Sack
Sac résistant à l'humidité

(30) Priority: 25.11.1991 FI 915539
(43) Date of publication of application: 09.06.1993
(73) Proprietor: YHTYNEET PAPERITEHTAAT OY, SF-21201 Raisio (FI); RAISION YHTYMÄ, RAISION TEHTAAT OY, 21201 Raisio (FI)
(72) Inventor: Hietanummi, Mikko, NL-1826 AH Alkmaar (NL); Sievers, Valter, SF-37640 Valkeakoski (FI); Nurmi, Kari, SF-21200 Raisio (FI); Hamunen, Antti, SF-21200 Raisio (FI)
(74) Representative: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) References cited:
- EP-A- 0 319 500
- DE-B- 1 046 472
- US-A- 4 109 056
- J.P. Casey "Pulp and Paper; Chemistry and Chemical Technology" 3rd edition, vol. IV, 1983, John Wiley & Sons, New York, pages 2455-2470, 2481-2499.

## Description

### TECHNICAL FIELD

The invention relates to paper sacks and their production techniques and particularly pertains to moisture-restistant sacks.

### TECHNICAL BACKGROUND

Nowadays, moisture-resistant paper sacks are mostly manufactured from plastic coated paper. Although sacks comprising paper coated with a styrene-butadiene copolymer have been described in DE-B-1 046 472, polyethylene is the most usual type of plastic used. One of the disadvantages of these kinds of sacks is that the sack material does not readily lend itself to the preparation of recycled paper. When defibering the material the plastic remains in quite large particles and is very difficult to separate from the pulp. These particles then melt in the production process when the paper web is dried at a high temperature. The melted sticky plastic substance causes problems in the process. Furthermore, holes form in the paper where the plastic particles melt.

It is known from US-A-4 109 056, EP-A-0 319 500 and J.P. Casey "Pulp and Paper; Chemistry and Chemical Technology" 3rd edition, Vol. IV, 1983, John Wiley & Sons, New York, pages 2455 - 2470, 2481 - 2499, that coatings comprising blends of starch and synethetic polymers like styrene-butadiene copolymers impart water resistance to paper.

### GENERAL DESCRIPTION OF THE INVENTION

Now a moisture-resistant sack and production method have been invented as described in the independent patent claims. The invention's various advantageous applications are described in the dependent claims.

Fundamental to the invention is that a layer of material which contains a modified starch and synthetic polymer is used as a moisture barrier in the sack paper. The material lends itself to repulping and paper preparation.

### DETAILED DESCRIPTION OF THE INVENTION

According to the invention, moisture-resistant paper sacks are made in which the moisture barrier layer is made up of a mixture of modified starch and synthetic polymer. Graft copolymer, in which polymer chains formed from the synthetic polymers are covalently attached to the starch body, is best suited for the modified starch. Polystyrene or polybutadiene is best suited for the polymer.

The starch should be small-moleculed. Such starch grades, usually split by oxidisation, are commercially available. Splitting may also be carried out as the first stage in connection with the grafting reaction. The degree of splitting should be kept as constant as possible.

Dispersion is best produced by emulsion polymerizing the monomers in the presence of starch, whereby both synthetic polymers and grafted starch are formed. Usual additives, such as initiators and surface-active agent are used in the polymerization.

A desired amount of dispersion is spread over the surface of the paper and dried, whereby a moisture-resistant layer is formed. This layer, however, is not as impermeable to vapours as ordinary plastic films. In many cases this is advantageous. For example, in ordinary sack filling machines the sack must be permeable to air (which is why the plastic films used in sacks are perforated separately).

The properties of the moisture-barrier layer, such as its permeability to vapour, can be modified by changing the composition and thickness of the layer. For example, wax dispersions can be used as additives. For normal paper sack material the preferable steam permeability is approximately 20 g/m²/24h.

At pulping, the moisture barrier layer disperses into the pulp without the formation of detrimental plastic particles.

One further advantage is that the moisture-barrier layer also degrades in nature significantly more quickly than fully synthetic plastics.

According to the invention the sacks are made from the paper web by first spreading the dispersion on the paper, drying the paper and then making sacks in the normal way.

In making multi-ply sacks the moisture-barrier layer can, if desired, be left between the layers of paper. In 3-ply sacks, paper with a moisture-barrier layer can also be used between the plies of normal paper.

The moisture-barrier layer is best formed into a film only on one side of the paper. In this case, to prevent the paper from curling, it is preferable to flex (or fracture) the film mechanically before the sack is manufactured.

Below, some applications of the invention are described with the help of examples.

### Manufacture of polymer latex

The commercial Raisamyl 302P starch used in the examples is potato starch oxidised by hydrogen peroxide. The viscosity in a 10% solution at 60°C is 20 - 30 mPas. The native potato starch used was split enzymatically with alfa-amylase.

### Example 1:

(A1) 34.30g of oxidised starch Raisamyl 302P was elutriated in 150g of water and transferred to a pressure-proof reaction vessel. The temperature of the mixture was increased to 100°C for 20 minutes to dissolve the starch grains. After this the mixture was cooled to 70°C and a solution containing 2.5g of sodium lauryl sulfate in 50ml of water was added. A monomer mixture from a pressure burette containing 116.8g of styrene and 73.9g of butadiene washed in a lye solution, as well as 3.0g of acrylic acid, was gradually added to the mixture over a two hour period. An initiator solution containing 3.0g of ammonium persulfate in 70g of water was added from another pressure burette. Polymerization was allowed to continue for 12 hours. This resulted in a white dispersion with a solids content of 45.8% and a viscosity of 890 mPas measured with a Brookfield LVT-viscometer measuring head No. 2 at a speed of 100rpm. The measurements were carried out after the product had been neutralised to pH 6.8 with NaOH. The calculated starch content is 13%.

### Example 2:

(A2) 34.5g of oxidised starch was elutriated in 150g of water and boiled for 20 minutes to dissolve the starch. 2.5g of sodium lauryl sulfate in 50ml of water as well as the catalyst solution and monomer solution in accordance with example 1 were added to the solution. In this case the monomer solution was made up of 146g of vinyl acetate and 22g of butylacrylate. The reaction was allowed to continue for 14 hours. The solids content of the neutralised product was 40.8% and the viscosity 600 mPas at a temperature of 25°C.

### Example 3:

(B1) Production of the starch copolymer. 250g of native potato starch, the moisture content of which was 16%, was elutriated in 220g of water. 0.05 U/starch gramme of B. licheniformis temperature stable alfa-amylase, which had an activity of 984 U/ml, was added to the suspension. At the same time and fixing well, the temperature of the suspension was gradually increased to 90°C and kept at this temperature for a period of 30 minutes. In order to stop enzyme activity 0.5ml of 30% hydrogen peroxide was added and the temperature decreased to 60°C. A flow of nitrogen was conducted to the reaction mixture, 0.2g of CuS04 was added and at the same time 38g of styrene and 6g of 30% hydrogen peroxide were concurrently dripped into the mixture over a period of 1.5 hours. The reaction was allowed to continue for a further 2 hours after which the white dispersion obtained was cooled to room temperature. The viscosity of the dispersion at 25°C was 670 mPas and the solids content 51.8%.

### Example 4:

(B2) The production of the starch graft polymer was carried out as in example 3 using butylacrylate (75g) as the monomer to be grafted. The amount of starch was 209g and this was elutriated in 217g of water. This resulted in a yellowish dispersion which had a viscosity of 610 mPas at room temperature and a solids content of 50.5%.

### Example 5:

This example describes the final compositions of the formulations containing dispersions in accordance with examples 1 - 4 to be applied on the surface of paper, and of comparative formulations and the properties of the papers treated with these. LD46O is a styrene-butadiene latex manufactured by Raision Lateksi Oy, RN1125 is a vinyl acetate acrylate latex manufactured by Rasional Oy, Vahad is a wax dispersion containing paraffin wax which melts between approximately 50 - 70°C.

The dispersion was spread on to cardboard (190 g/m²) using a laboratory coating machine (Endupapp). The permeability values of steam (WWP) were measured in accordance with the ISO 258-1974 method (unit g/m²/24 h). PM means the amount of applied dispersion dry (g/m²).

The table value PA describes the pulpability properties of the treated cardboard. The value is defined as follows: the treated cardboard was pulped in accordance with the SCAN-C 18:65 method. Laboratory sheets (approx. 100 g/m²) were produced from the stock. The quality of the sheets was graded on a scale of 0 - 5, in which 0 represented good pulpability (no accumulation of the coating observed) and 5 represented poor quality (great accumulation of the coating or unevenness due to poor dissolution of the pulp).

**Table 1**

| | R1 | R2 | R3 | R4 | R5 | R6 | R7 | R8 | R9 | R10 |
|---|---|---|---|---|---|---|---|---|---|---|
| LD 460 | 100 | - | - | - | - | 70 | 70 | 60 | 90 | - |
| RN1125 | - | 100 | - | - | - | - | - | - | - | - |
| A1 | - | - | 100 | 90 | - | - | - | - | - | - |
| A2 | - | - | - | - | 100 | - | - | - | - | - |
| B1 | - | - | - | - | - | 30 | - | 30 | - | - |
| B2 | - | - | - | - | - | - | 30 | - | - | - |
| Vahad | - | - | - | 10 | - | - | - | 10 | 10 | - |
| PM | 17.8 | 20.2 | 19.9 | 18.7 | 21.0 | 19.4 | 20.3 | 20.1 | 18.0 | 0 |
| WWP | 29 | 98 | 32 | 7 | 36 | 27 | 38 | 8 | 5 | 151 |
| PA | 5 | 3 | 2 | 2 | 0 | 1 | 1 | 1 | 4 | 0 |

### Test coating of paper

UG-75 and Wex-80 sack papers manufactured by United Paper Mills were coated in laboratory with the invented R8 dispersion appearing in table 1. A content of 16, 20 and 25 g/m² was attempted in coating. These appear in the table as R16, R20 and R25 respectively. Coating was carried out using the air brush technique. Firstly IR-drying was used in drying to form a film and the final drying was carried out in a steam cabinet. Blocking was prevented by using a cooling cylinder. Web tension caused by the film was removed by dissipation without rupturing the film. The properties were compared with the properties of uncoated paper and paper coated with PVA and PE plastic.

The results are shown in tables 2 and 3 enclosed.

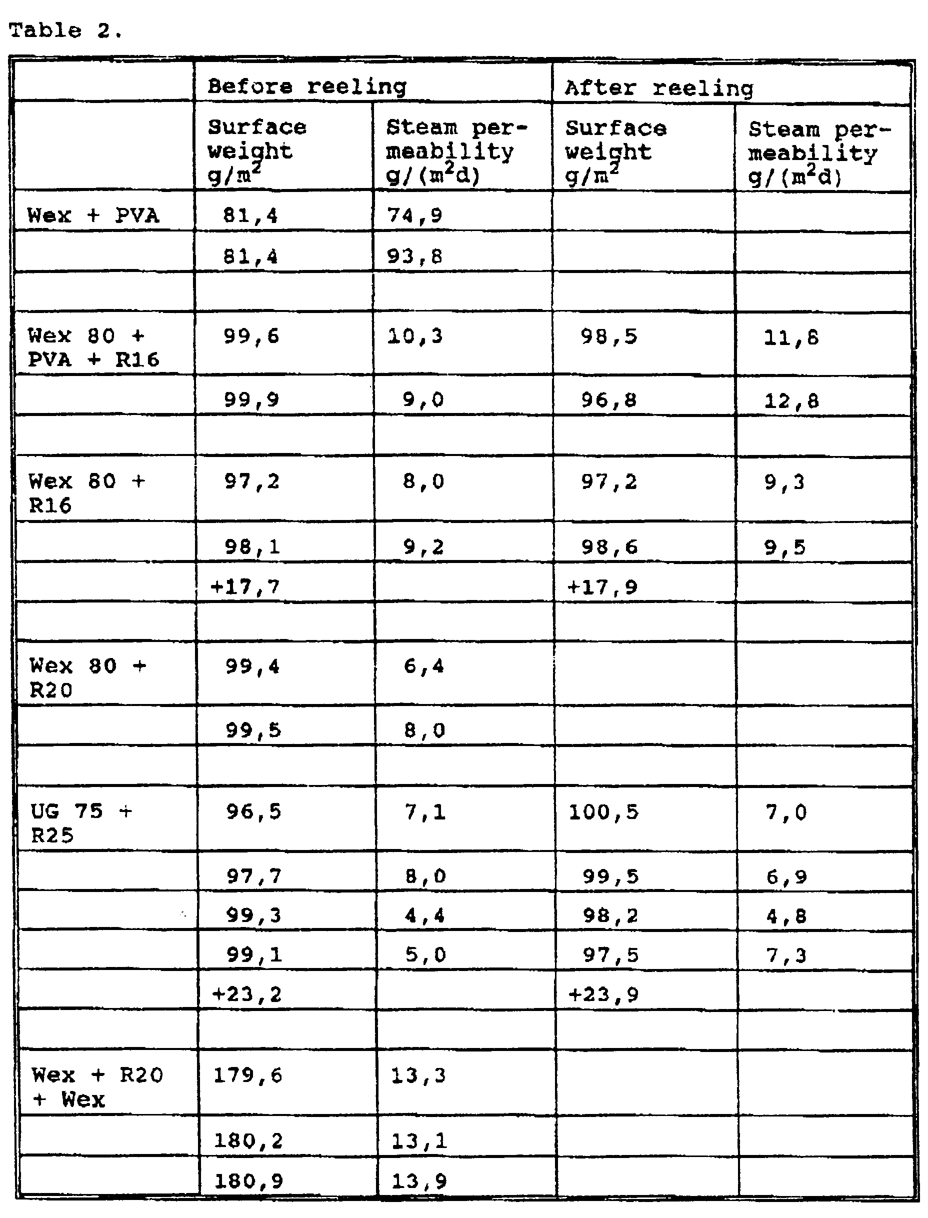

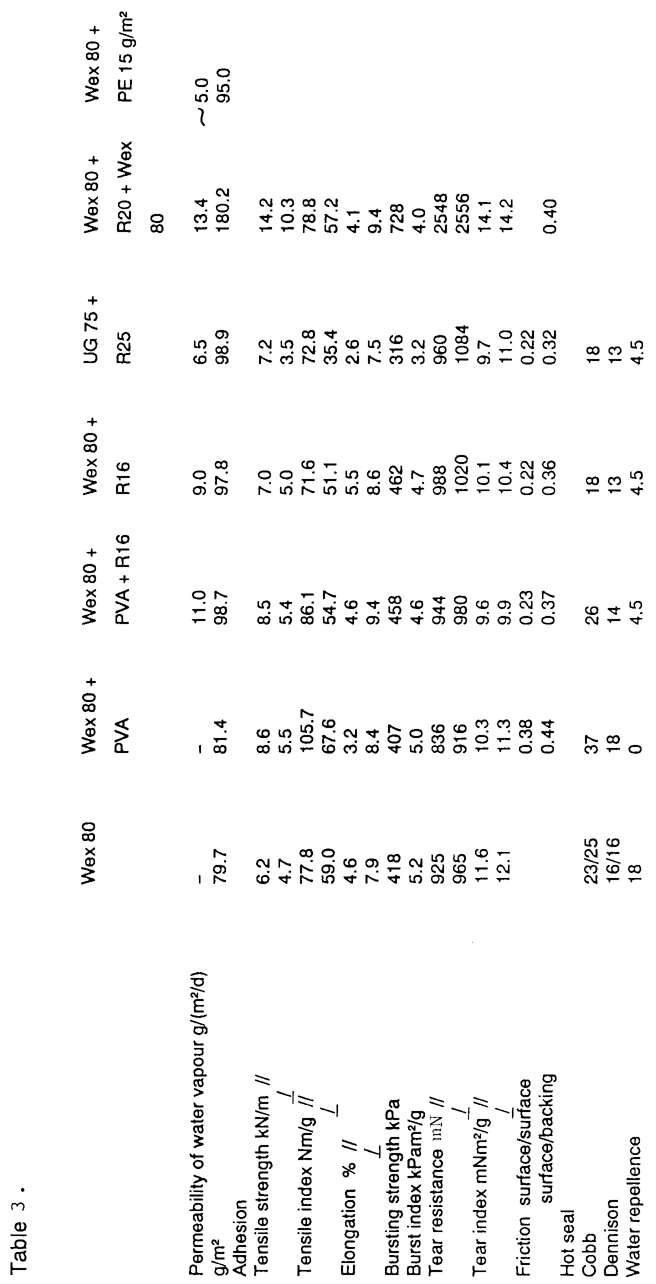

### Test disintegration of coated paper

The UG 75 + R25 paper which was coated in the aforementioned way was shredded and disintegrated in water consistency of 2% in a wet disintegrator (2950rpm/temperature approx. 20°C). Samples were taken of the stock to make inspection sheets 15 and 30 minutes after disintegration. Before making the sheet the sample was strained with a Somerville-strainer (gauge 0.15mm). The insoluble substance remaining in the strainer was collected and weighed. After 15 minutes 2.9% remained in the strainer and after 30 minutes 1.2%. The results show that the paper disintegrated extremely well into stock.

### Coating the paper web on an industrial scale

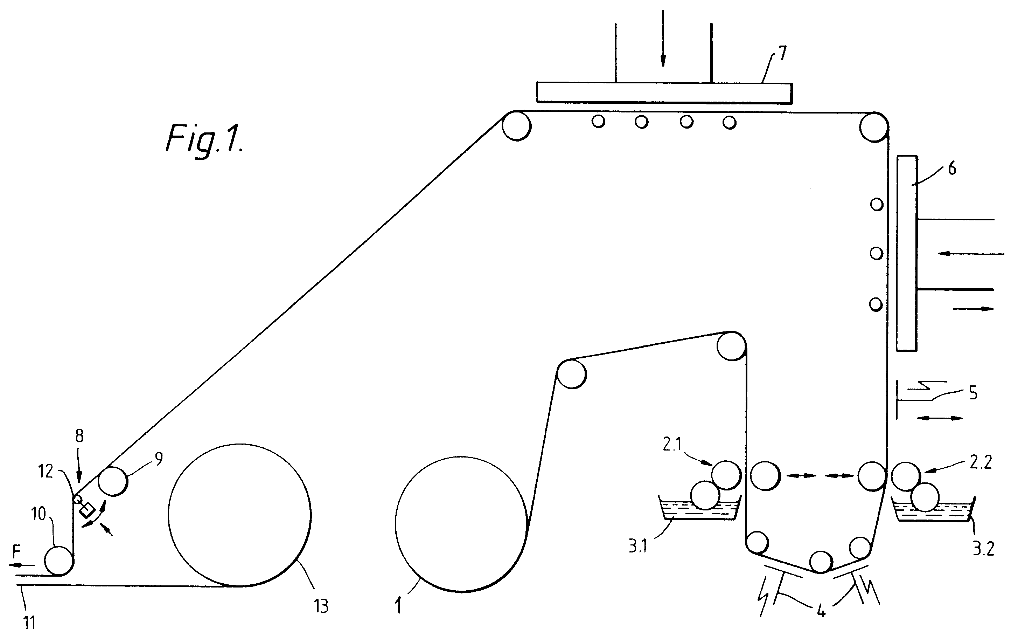

Paper can be coated, for example, in the type of equipment as per figure 1.

In the equipment the paper web is taken from a reel 1 and conducted to a first coating unit 2.1, in which it is coated with a layer of a dispersion 3.1. After this, if desired, the web can be intermediately dried with an infrared drier 4. In position 2.2 yet a second layer of the dispersion 3.2 is applied and shock drying carried out using an infrared drier 5, whereby an even layer of film forms. The effect of the drier 5 can be adjusted. Final drying is carried out using hot air blowers in equipment 6 and 7.

The dried web is then finally conducted to a film fracturing equipment 8 in which the tension of the film is removed. The tension would otherwise result in paper curling. The web is conducted over a roller 9 and under a roller 10 to a folding roller 11 loaded by a force F pulling the web. Between the rollers 9 and 10 the web is pressed from underneath (i.e. on the opposite side of the film) by a doctor 12. The distance and angle of the doctor 12 in relation to the web can be adjusted in order to get the desired degree of fracturing. The doctor can also be angled in a cross direction in order to remove any possible wrinkles. Finally the fractured web is rolled around the reel 13.

## Claims

1. A moisture-resistant sack comprising one or more paper layers of which one or more layers are coated with a moisture-resistant film, characterized in that said film contains modified starch and synthetic polymers.

2. A sack according to claim 1, characterized in that the starch has been modified by splitting or graft polymerization.

3. A sack according to claim 1, characterized in that the starch has been modified by grafting synthetic polymers into it.

4. A sack according to claim 2 or 3, characterized in that the grafting has been carried out by emulsion polymerizing monomer in the presence of starch.

5. A sack according to claim 4, characterized in that the split starch has been used as the starch.

6. A sack according to any of claims 1 to 5, characterized in that the synthetic polymer contains styrene-butadiene copolymer.

7. A sack according to any of claims 1 to 6, characterized in that the synthetic polymer contains vinyl acetate acrylate copolymer.

8. A sack according to any of claims 1 to 7, characterized in that the water vapour permeability of the coated paper is approximately 15 - 30 g/m²/24h.

9. A method for the preparation of moisture-resistant paper sacks by forming a moisture-resistant film on the paper, and using the thus coated paper for the manufacture of paper sacks, characterized in that said film contains modified starch and synthetic polymer.

10. A method according to claim 9, characterized in that the moisture-resistant film is formed on the paper by applying the dispersion (3.1., 3.2) containing modified starch and synthetic polymer on the paper and drying the paper (4,5, 6,7), whereupon as the first phase of the drying, shock drying (4,5) is preferably used.

11. A method according to claim 10, characterized in that after drying (5) and before the manufacture of the sacks the tension of the moisture-resistant film curling the paper is removed (8) without breaking the film.

12. A method according to any of claims 9 to 11, characterized in that the thus coated paper is joined to another paper web and the laminate is used for the manufacture of multiply paper sacks.

## Patentansprüche

1. Feuchtigkeitsbeständiger Sack, der ein oder mehrere Papierschichten aufweist, von denen eine oder mehrere Schichten mit einem feuchtigkeitsbeständigen Film beschichtet sind, dadurch gekennzeichnet, daß dieser Film modifizierte Stärke und synthetische Polymere enthält.

2. Sack nach Anspruch 1, dadurch gekennzeichnet, daß die Stärke durch Spaltung oder Pfropfpolymerisation modifiziert wurde.

3. Sack nach Anspruch 1, dadurch gekennzeichnet, daß die Stärke durch Aufpfropfen von synthetischen Polymeren modifiziert wurde.

4. Sack nach Anspruch 2 oder 3, dadurch gekennzeichnet, daß die Pfropfung durch Emulsionspolymerisation von Monomeren in Gegenwart von Stärke durchgeführt wurde.

5. Sack nach Anspruch 4, dadurch gekennzeichnet, daß die gespaltene Stärke als Stärke verwendet wurde.

6. Sack nach einem der Ansprüche 1 bis 5, dadurch gekennzeichnet, daß das synthetische Polymer Styrol-Butadien-Copolymer enthält.

7. Sack nach einem der Ansprüche 1 bis 6, dadurch gekennzeichnet, daß das synthetische Polymer Vinylacetat-Acrylat-Copolymer enthält.

8. Sack nach einem der Ansprüche 1 bis 7, dadurch gekennzeichnet, daß die Durchlässigkeit für Wasserdampf des beschichteten Papiers etwa 15 - 30 g/m²/24h beträgt.

9. Verfahren zur Herstellung von feuchtigkeitsbeständigen Papiersäcken durch Bildung eines feuchtigkeitsbeständigen Films auf dem Papier und Verwendung des so beschichteten Papiers für die Herstellung von Papiersäcken, dadurch gekennzeichnet, daß der Film modifizierte Stärke und synthetisches Polymer enthält.

10. Verfahren nach Anspruch 9, dadurch gekennzeichnet, daß der feuchtigkeitsbeständige Film auf dem Papier gebildet wird durch Aufbringen der Dispersion (3.1, 3.2), die modifizierte Stärke und synthetisches Polymer enthält, auf das Papier und durch Trocknen des Papiers (4,5; 6,7), wobei als erste Stufe der Trocknung vorzugsweise Schocktrocknung (4,5) verwendet wird.

11. Verfahren nach Anspruch 10, dadurch gekennzeichnet, daß nach der Trocknung (5) und vor der Herstellung der Säcke die Spannung des feuchtigkeitsbeständigen Films, die das Papier aufrollt, entfernt wird (8), ohne den Film zu zerreißen.

12. Verfahren nach einem der Ansprüche 9 bis 11, dadurch gekennzeichnet, daß das so beschichtete Papier mit einer anderen Papierbahn verbunden wird und das Laminat für die Verstellung von mehrschichtigen Papiersäcken verwendet wird.

## Revendications

1. Un sac résistant à l'humidité comprenant une ou plusieurs couches de papier parmi lesquelles une ou plusieurs couches sont recouvertes d'une pellicule résistante à l'humidité, caractérisé en ce que la dite pellicule contient de l'amidon modifié et des polymères synthétiques.

2. Un sac selon la revendication 1, caractérisé en ce que l'amidon a été modifié par fission ou par polymérisation greffée.

3. Un sac selon la revendication 1, caractérisé en ce que l'amidon a été modifié en lui greffant des polymères synthétiques.

4. Un sac selon la revendication 2 ou 3, caractérisé en ce que la greffe a été réalisée en polymérisant le monomère en émulsion en présence d'amidon.

5. Un sac selon la revendication 4, caractérisé en ce que l'amidon clivé a été utilisé comme amidon.

6. Un sac selon l'une quelconque des revendications 1 à 5, caractérisé en ce que le polymère synthétique contient un copolymère styrène-butadiène.

7. Un sac selon l'une quelconque des revendications 1 à 6, caractérisé en ce que le polymère synthétique contient un copolymère acrylate-acétate de vinyle.

8. Un sac selon l'une quelconque des revendications 1 à 7, caractérisé en ce que la perméabilité à la vapeur d'eau du papier recouvert est approximativement de 15-30 g/m²/24h.

9. Procédé pour la préparation de sacs en papier résistants à l'humidité en formant une pellicule résistante à l'humidité sur le papier, et en utilisant le papier ainsi recouvert pour la fabrication de sacs en papier, caractérisé en ce que la dite pellicule contient de l'amidon modifié et un polymère synthétique.

10. Procédé selon la revendication 9, caractérisé en ce que la dite pellicule résistante à l'humidité est formée sur le papier en appliquant la dispersion (3.1., 3.2) contenant de l'amidon modifié et un polymère synthétique sur le papier et en séchant le papier (4,5, 6,7), et en ce que comme première phase de séchage, on utilise de préférence un séchage par décharge électrique (4,5).

11. Procédé selon la revendication 10, caractérisé en ce qu'après le séchage (5) et avant la fabrication des sacs la tension de la pellicule résistante à l'humidité qui fait se recourber le papier est supprimée (8) sans rompre la pellicule.

12. Procédé selon l'une quelconque des revendications 9 à 11, caractérisée en ce que le papier ainsi recouvert est joint à un autre papier et le lamifié est utilisé pour la fabrication de sacs en papier à plusieurs épaisseurs.
